# FASCICULE DE BREVET EUROPEEN

(11) **EP 4 520 585 B1**
(45) Date de publication et mention de la délivrance du brevet: **17.12.2025**
(21) Numéro de dépôt: 24193192.2
(22) Date de dépôt: 06.08.2024
(51) Int. Cl.: B60M 1/28, H02G 1/02, B61K 9/08

(54) **DISPOSITIF DE MAINTENANCE DE FIL DE CONTACT DE CATÉNAIRE**
VORRICHTUNG ZUR WARTUNG EINES OBERLEITUNGSDRAHTES
CATENARY CONTACT WIRE MAINTENANCE DEVICE

(30) Priorité: 07.09.2023 FR 2309401
(43) Date de publication de la demande: 12.03.2025
(73) Titulaire: 4NRJ, 41260 La Chaussée-Saint-Victor (FR)
(72) Inventeur: BUCHER, Julien, 37110 LE BOULAY (FR)
(74) Mandataire: Lequien, Philippe

(56) Documents cités:
- WO-A1-2005/101600
- WO-A1-2015/141238
- DE-U1- 202017 001 346
- IT-A1- 202000 029 939

## Description

Le domaine de l'invention est celui de la conception et de la fabrication des équipements de maintenance pour les installations ferroviaires.

Plus précisément, l'invention concerne un dispositif de maintenance d'équipements pour l'alimentation en courant électrique de locomotrices de trains circulant sur une voie ferrée.

La transmission du courant électrique au train circulant sur une voie ferrée peut être réalisée par l'intermédiaire d'au moins un fil de contact situé au-dessus de la voie ferrée.

Un tel fil de contact alimente en courant des pantographes portés par une locomotrice. Le pantographe est un dispositif qui permet à une locomotrice de capter le courant par frottement sur le fil de contact d'une caténaire.

Le fil de contact est suspendu à un câble porteur par l'intermédiaire d'une succession de câbles verticaux dénommés pendules, dont les longueurs sont adaptées à maintenir le fil de contact sensiblement horizontal. L'ensemble formé par le fil de contact, les pendules et le câble porteur est classiquement désigné « caténaire » (ou ligne aérienne de contact).

Une telle caténaire est supportée au-dessus de la voie ferrée par des poteaux de support disposés, de loin en loin, le long de la voie ferrée.

Un fil de contact d'une caténaire se présente classiquement sous la forme d'un élément longitudinal et comporte sur chaque face latérale une rainure longitudinale de fixation pour permettre, en particulier, la liaison du fil de contact avec les pendules de la caténaire à l'aide d'une mâchoire.

Différents dispositifs de maintenance existent pour contrôler les fils de contact, et réaliser des opérations d'entretien.

Certains de ces dispositifs peuvent notamment être suspendus aux fils de contacts, et tel que cela apparaît par la suite, l'invention a pour objectif de proposer une amélioration de ces dispositifs suspendus.

A titre d'exemple, ces dispositifs peuvent être employés pour contrôler l'état d'usure des fils de contact.

Au fur et à mesure des passages des trains, les pantographes des locomotrices frottent sur la face inférieure des fils de contact engendrant une usure de celui-ci. En pratique, cette usure se traduit par un méplat qui se forme sur la face inférieure du fil de contact, diminué en son épaisseur.

Lorsqu'un fil de contact est usé, celui-ci peut rompre et ainsi entraîner des dégâts importants sur la caténaire. Classiquement, une limite d'usure est définie pour un fil de contact, cette limite correspondant à une épaisseur minimale du fil de contact avant son remplacement.

Afin de limiter le risque de rupture, on surveille l'état d'usure du fil de contact, c'est-à-dire son épaisseur, pour en détecter les points faibles pouvant entraîner une rupture. Pour ce faire, l'usure du fil de contact est surveillée de manière périodique, manuellement ou automatiquement.

Il a été proposé un dispositif de mesure de l'épaisseur d'un fil de contact destiné à être porté par une perche. Un tel dispositif de mesure est décrit dans le document de brevet français publié sous le numéro FR3033883.

Ce dispositif de mesure comprend un bâti assemblé à l'extrémité supérieure d'une perche. Le bâti présente des moyens de mise en suspension du bâti sur un fil de contact, le bâti portant un premier élément et un deuxième élément formant un passage d'engagement du fil de contact, et comprenant des moyens de mesure de l'épaisseur du fil de contact à l'intérieur du passage d'engagement.

Selon cette technique, l'opérateur monte le dispositif de mesure au bout d'une perche pour mettre en suspension le dispositif sur un fil de contact en vue de réaliser une mesure de l'épaisseur du fil de contact.

Un tel dispositif présente à l'usage plusieurs inconvénients.

On constate en pratique que le déplacement du dispositif de mesure le long du fil de contact s'opère par à-coups du fait d'arcboutements successifs, ce qui peut nuire à la mesure et s'avère, en tout état de cause, très désagréable pour l'opérateur.

Un autre dispositif destiné à être porté par une perche est décrit dans le document de brevet publié sous le numéro FR3091919.

Ce dispositif est conçu pour réaliser une profilomètre laser d'un fil de contact.

A cet effet, le dispositif comprend un bâti délimitant un passage de réception du fil de contact, au sein duquel le profil du fil de contact est déterminé.

Quand le fil de contact est inséré dans le passage de réception, il repose sur des cylindres montés libres en rotation sur le bâti. De cette manière, l'opérateur manipulant la perche peut faire avancer ou reculer le dispositif le long du fil de contact, en le faisant rouler sur le fil de contact, afin de déterminer le profil du fil de contact.

Ce dispositif montre néanmoins des limites, notamment du fait que les fils de contact peuvent présenter sur leur longueur des éléments rapportés empêchant le passage du bâti du dispositif. Ces éléments rapportés peuvent par exemple correspondre aux mâchoires permettant l'accrochage des fils de contact aux pendules.

Le document IT202000029939A1 divulgue un dispositif d'inspection de fil de contact de caténaire se déplaçant sur ce fil de caténaire.

Plus généralement, du fait des contraintes auxquelles sont soumises ces dispositifs, des conceptions robustes et fiables sont recherchées.

L'invention a notamment pour objectif de pallier à ces inconvénients de l'art antérieur, et de répondre aux besoins opérationnels exprimés.

Plus précisément, l'invention a pour objectif de proposer un dispositif de maintenance de fil de contact qui puisse être suspendu sur un fil de contact et évoluer le long du fil de contact d'une manière optimisée par rapport à ce qui est permis par l'art antérieur.

L'invention a également pour objectif de fournir un tel dispositif qui présente une conception robuste et fiable.

Ces objectifs, ainsi que d'autres qui apparaîtront par la suite, sont atteints grâce à l'invention qui a pour objet un dispositif de maintenance de fil de contact de caténaire, comprenant :
- un bâti délimitant un passage pour un fil de contact ;
- des moyens de liaison sur un fil de contact reçu dans le passage, les moyens de liaison étant destinés à permettre le déplacement du dispositif le long du fil de contact, les moyens de liaison étant portés par le bâti et comprenant des organes de roulement sur le fil de contact reçu dans le passage et sur lequel le dispositif est suspendu; caractérisé en ce que chaque organe de roulement est monté mobile entre une position d'utilisation dans laquelle l'organe de roulement surplombe le passage pour pouvoir rouler sur le fil de contact reçu dans le passage, et au moins une première position escamotée dans laquelle l'organe de roulement ne surplombe pas le passage, les moyens de liaison comprenant un suiveur d'escamotage pour chaque organe de roulement, d'un système came/suiveur, conçu pour entraîner le passage de l'organe de roulement de sa position d'utilisation vers sa première position escamotée au contact d'un élément surplombant le fil de contact et auquel le fil de contact est couplé, lors d'un déplacement du dispositif le long du fil de contact dans au moins un premier sens de déplacement, et en ce que les moyens de liaison comprennent des moyens de rappel élastique de chaque organe de roulement dans sa position d'utilisation.

Le dispositif selon l'invention peut évoluer le long d'un fil de contact d'une manière qui est optimisée par rapport à ce que permet l'art antérieur.

En effet, le dispositif selon l'invention peut franchir des obstacles situés au-dessus du fil de contact grâce à ses organes de roulement qui peuvent s'escamoter. Lors de la progression du dispositif le long du fil de contact, si le suiveur d'escamotage arrive en contact avec un élément auquel le fil est suspendu, tel qu'une mâchoire d'une suspente, il va provoquer le passage de l'organe de roulement vers sa position escamotée, permettant ainsi le franchissement de cet élément. Une fois que cet élément est franchi, les moyens de rappel élastique permettent le retour de l'organe de roulement dans sa position d'utilisation.

De plus ce dispositif présente une conception robuste et fiable.

L'entraînement des organes de roulement vers leur position escamotée et le rappel élastique vers leur position d'utilisation sont réalisés de manière mécanique. Ceci permet au dispositif de présenter la robustesse et la fiabilité qui peut faire défaut à des systèmes électromécaniques.

De plus une telle conception est très aisément réparable par rapport à la réparabilité des systèmes électromécaniques.

Selon un mode de réalisation avantageux, chaque organe de roulement est monté mobile en rotation entre deux positions escamotées, dont la première position escamotée et une seconde position escamotée, entre lesquelles est située la position d'utilisation, le suiveur d'escamotage étant conçu pour entraîner le passage de l'organe de roulement de sa position d'utilisation vers sa seconde position escamotée au contact d'un élément surplombant le fil de contact et auquel le fil de contact est couplé, lors d'un déplacement du dispositif le long du fil de contact dans un second sens de déplacement, opposé au premier sens de déplacement.

Grâce à ce mode de réalisation, le dispositif peut réaliser des allers-retours le long d'un fil de contact. Ceci est particulièrement avantageux en ce que le dispositif peut être installé et désinstallé sur le fil de contact depuis un unique endroit. L'opérateur du dispositif n'a ainsi pas besoin de positionner le dispositif sur le fil de contact à un premier endroit, puis de se déplacer jusqu'à un second endroit vers lequel le dispositif s'est déplacé pour le désinstaller du fil de contact.

Selon une conception avantageuse, le dispositif comprend des moyens moteurs conçus pour entraîner le déplacement du dispositif le long du fil de contact reçu dans le passage.

Il n'est ainsi pas nécessaire de pousser le dispositif le long du fil de contact.

Le dispositif peut alors évoluer de manière autonome ou semi autonome sur le fil de contact.

Dans le cas où le dispositif est configuré pour évoluer de manière autonome sur le fil de contact, le dispositif embarque alors une électronique permettant de piloter les moyens de moteur afin de faire avancer le dispositif, voire reculer le dispositif s'il en est capable.

Dans le cas où le dispositif est configuré pour évoluer de manière semi autonome sur le fil de contact, alors le dispositif est équipé de moyens de télécommunications lui permettant de recevoir des instructions de la part d'un opérateur par exemple à l'aide une télécommande configurée pour permettre l'envoi d'instructions au dispositif par le biais de ses moyens de télécommunications.

Selon une solution avantageuse, le dispositif comprend un système annexe de positionnement en position escamotée de chaque organe de roulement pour l'installation et/ou la désinstallation du dispositif sur un fil de contact.

L'installation et/ou la désinstallation du dispositif sur un fil de contact sont ainsi facilitées.

De cette manière, il n'est pas nécessaire à un opérateur d'utiliser un moyen de levage pour arriver au niveau du fil de contact afin de faire passer manuellement chacun des organes de roulement en position escamotée pour permettre l'insertion du fil de contact dans le passage.

Selon un premier mode de réalisation envisageable, le système annexe de positionnement comprend un suiveur annexe pour chaque organe de roulement, d'un système came/suiveur, conçu pour entraîner le passage de l'organe de roulement de sa position d'utilisation vers sa position escamotée au contact d'un fil de contact selon une direction d'insertion du fil de contact dans le passage.

Il suffit alors de pousser le dispositif contre le fil de contact afin de faire rentrer le fil de contact à l'intérieur du passage.

Selon un second mode de réalisation envisagé, le système annexe comprend :
- un câble de traction, pour chaque organe de roulement, de l'organe de roulement vers sa ou l'une de ses positions escamotée ;
- des moyens d'actionnement pilotables de chaque câble de traction.

L'installation et la désinstallation du dispositif sur un fil de contact se réalisent alors par le biais des moyens d'actionnement pilotable qui permettent de positionner tous les organes de roulement en position escamotée.

Préférentiellement, le dispositif comprend un connecteur de perche de manipulation, configuré pour permettre la fixation du dispositif au bout d'une perche de manipulation.

De cette manière, le dispositif peut être installé, et désinstallé, à l'aide d'une perche de manipulation dont l'usage est répandu dans le domaine de la maintenance ferroviaire. Une telle perche de manipulation est classiquement électriquement isolée contre les hautes tensions. Son usage pour l'installation et la désinstallation du dispositif sur un fil de contact facilite les opérations de maintenance, et sécurise l'intervention de l'opérateur.

Avantageusement, les moyens de liaison comprennent des roulements de guidage du fil de contact dans le passage.

La position relative du dispositif par rapport au fil de contact, et en d'autres termes la position assumée par le fil de contact à l'intérieur du passage, sont ainsi particulièrement précises. Ceci permet au dispositif selon l'invention de porter des outils de mesure de caractéristiques du fil de contact, et d'en tirer des mesures fiables.

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
- la figure 1 est une représentation schématique vue de côté d'un dispositif selon l'invention suspendu sur un fil de contact ;
- la figure 2 est une représentation schématique partielle, vu du dessus, du dispositif selon l'invention suspendue sur un fil de contact ;
- la figure 3 est une représentation schématique illustrant l'escamotage d'organes de roulement du dispositif pour franchir un élément surplombant le fil de contact ;
- la figure 4 est une représentation schématique en perspective d'un premier mode de réalisation d'un bras support portant un organe de roulement ;
- la figure 5 est une représentation schématique vue de côté d'un second mode de réalisation d'un bras support portant un organe de roulement.

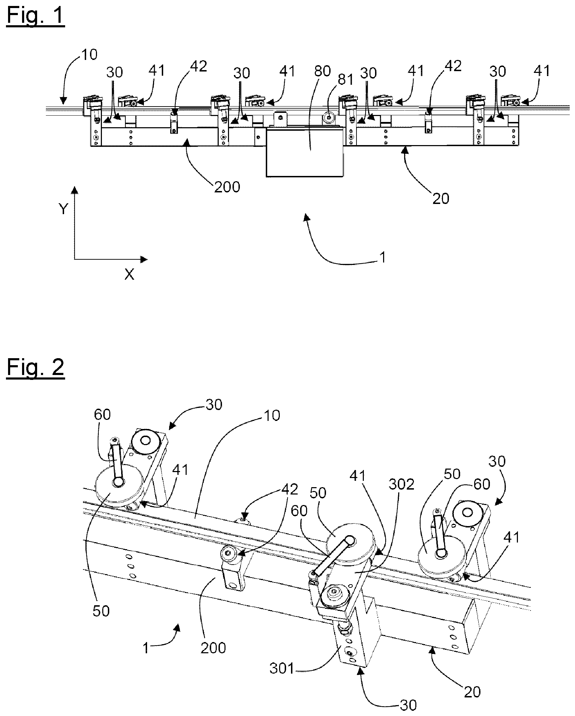

En référence à la figure 1, un dispositif 1 de maintenance de fils 10 de contact de caténaire est représenté.

Ce dispositif 1 de maintenance est représenté suspendu sur un fil 10 de contact de caténaire.

À des fins de clarté, un repère est représenté sur la figure 1.

Ce repère comprend un axe X représentant une direction longitudinale, et un axe Y représentant une direction verticale. L'axe de X s'étend perpendiculairement à l'axe Y.

Le fil 10 de contact s'étend parallèlement à l'axe X.

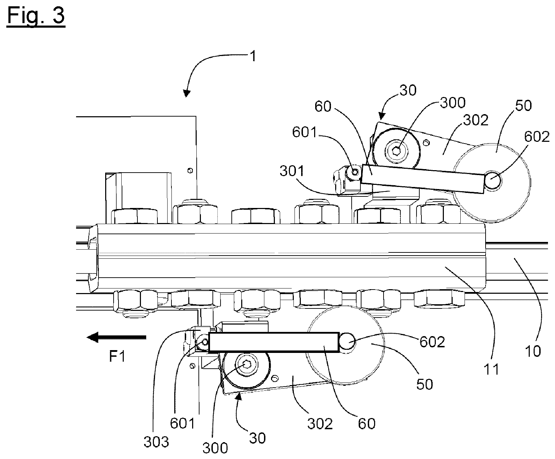

Tel que cela est visible sur la figure 3, un élément 11 rapporté est illustré sur le fil 10 de contact. Cet élément 11 rapporté est couplé au fil 10 de contact et surplombe au moins partiellement ce fil 10 de contact.

Cet élément 11 rapporté peut par exemple correspondre à une attache de suspente. Toutefois, d'autres types d'éléments 11 sont susceptibles d'être couplés au fil 10 de contact, et de le surplomber, par exemple une griffe de jonction.

Tel que cela est visible sur la figure 1, le dispositif 1 comprend un bâti 20.

Ce bâti 20 délimite un passage pour le fil 10 de contact.

Le bâti 20 comprend une partie longitudinale 200, qui s'étend notamment parallèlement à l'axe X.

Le passage s'étend plus particulièrement au-dessus de la partie longitudinale 200.

Cette partie longitudinale 200 peut-être formée d'un unique longeron ou d'un assemblage de plusieurs longerons.

Le bâti 20 comprend également des bras support 30 couplés à intervalle prédéterminé le long de la partie longitudinale.

Ces bras support 30 s'étendent depuis la partie longitudinale parallèlement à un axe transversal à l'axe X, de manière à border latéralement le passage.

Selon le présent mode de réalisation, les bras support 30 sont couplés alternativement de part et d'autre de la partie longitudinale.

Selon un mode de réalisation envisageable, les bras support 30 pourraient être tous couplés d'un seul côté de la partie longitudinale.

Le dispositif 1 comprend également des moyens de liaison sur un fil 10 de contact qui est reçu dans le passage.

Ces moyens de liaison sont conçus pour permettre le déplacement du dispositif 1 le long du fil 10 de contact. Les moyens de liaison sont portés par le bâti 20, directement ou indirectement, et plus précisément par les bras support 30 pour une partie de ces moyens de liaison selon le présent mode de réalisation.

En effet, les moyens de liaison comprennent selon le présent mode de réalisation:
- des organes de roulement 41 sur le fil 10 de contact reçus dans le passage et sur lequel le dispositif 1 est suspendu ;
- des roulements de guidage 42 du fil 10 de contact dans le passage.

Chaque organe de roulement 41 est porté par un bras support 30, tandis que les roulements de guidage sont portés directement par la partie longitudinale du bâti 20.

Selon le mode de réalisation illustré par les figures 1 et 2, les moyens de liaison comprennent quatre roulements de guidage 42 du fil 10 de contact.

Les roulements de guidage 42 sont chacun formés par un cylindre monté librement à rotation par rapport au bâti 20.

L'axe de rotation de chacun de ces cylindres s'étend orthogonalement à l'axe X.

Ces roulements de guidage 42 sont notamment regroupés par paire, et les deux paires sont espacées l'une de l'autre le long de la partie longitudinale du bâti 20.

Chaque paire de roulement de guidage 42 est configurée de manière à ce que les deux roulements de guidage 42 de la paire décrivent la forme d'un V au creux duquel le fil 10 de contact est destiné à être logé et à rouler dessus, lorsqu'il est reçu dans le passage et que le dispositif 1 circule le long de ce fil 10 de contact.

En référence aux figures 1 à 5, les organes de roulement 41 sont à présent décrit plus en détails.

Tel que cela est expliqué ci-après, chaque organe de roulement 41 est monté mobile entre une position d'utilisation, et au moins une première position escamotée.

À des fins de clarté, une description d'un organe de roulement 41 est produite ci-après, et cette description s'applique à chaque organe de roulement 41 du dispositif 1.

Chaque bras support 30 porte un organe de roulement 41.

Plus précisément, le bras support 30 comprend une partie principale 301 et un bras secondaire 302 monté articulé sur la partie principale 301. L'organe de roulement 41 est ainsi monté libre en rotation sur le bras secondaire 302.

Selon les présents modes de réalisation, l'organe de roulement 41 est formé par un cylindre. Il est néanmoins envisageable que les organes de roulement 41 prennent d'autres formes telles que celle de roues ou de galets.

En référence aux figures 1 et 2, l'organe de roulement 41 est dans une position d'utilisation.

Dans cette position d'utilisation, l'organe de roulement 41 surplombe le passage pour pouvoir rouler sur le fil 10 de contact qui est reçu dans le passage.

Dans cette position d'utilisation, l'axe autour duquel l'organe de roulement 41 est monté libre en rotation sur le bras secondaire s'étend orthogonalement à l'axe X.

Tel que cela est illustré sur la figure 3, l'organe de roulement 41 est dans une position escamotée, dite première position escamotée.

Dans cette première position escamotée, l'organe de roulement 41 ne surplombe pas le passage. L'organe de roulement 41 peut ainsi franchir un obstacle (l'élément 11) couplé sur une partie supérieure du fil 10 de contact et situé au-dessus de ce fil 10 de contact tel qu'illustré par la figure 3.

Afin de permettre le passage de l'organe de roulement 41 de sa position d'utilisation à sa position escamotée, les moyens de liaison comprennent un suiveur 50 d'escamotage pour chaque organe de roulement 41, d'un système came/suiveur.

Ce suiveur 50 d'escamotage est conçu pour entraîner le passage de l'organe de roulement 41 de sa position d'utilisation vers sa première position escamotée au contact d'un élément 11 surplombant le fil 10 de contact et auquel le fil 10 de contact est couplé, lors d'un déplacement du dispositif 1 le long du fil 10 de contact dans au moins un premier sens de déplacement (sens de déplacement du dispositif 1 illustré par la flèche F1 sur la figure 3). La came du système came/suiveur est ainsi formée par le ou les éléments 11.

Selon les présents mode de réalisation, le suiveur 50 d'escamotage est formé par un galet. Le suiveur 50 d'escamotage peut néanmoins être formé par un autre élément tel qu'un patin.

Les moyens de liaison comprennent également des moyens de rappel élastique 60 de chaque organe de roulement 41 dans sa position d'utilisation.

Ces moyens de rappel élastique 60 sont en l'occurrence formés par des ressorts de traction.

Ces moyens de rappel élastique 60 exercent une force tendant à maintenir l'organe de roulement 41 dans sa position d'utilisation.

Si une contrainte a entraîné le déplacement de l'organe de roulement 41 vers sa position escamotée, alors la force de rappel exercée par les moyens de rappel élastique 60 permet à l'organe de roulement 41 de revenir vers sa position d'utilisation dès que la contrainte n'est plus présente.

L'agencement de l'organe de roulement 41 sur le bras support 30 du mode de réalisation illustré par les figures 2 à 4 est décrit plus en détail ci-après.

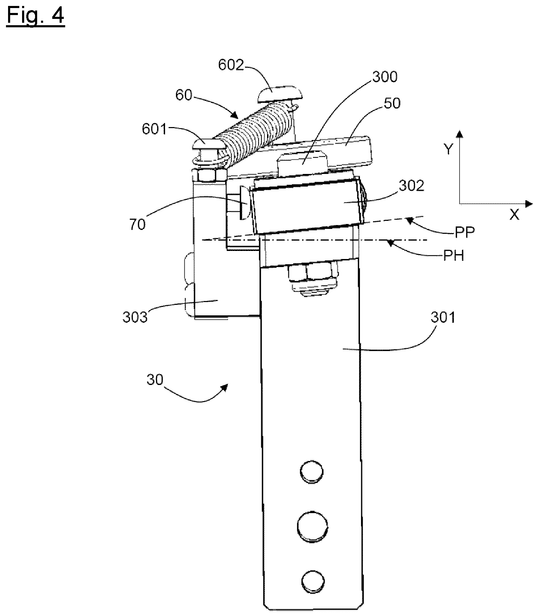

Tel que cela est visible sur la figure 4, la partie principale 301 du bras support 30 présente à son extrémité supérieure une face supérieure sur laquelle le bras secondaire 302 pivote, autour d'un axe 300 s'étendant perpendiculairement à la face supérieure.

À une extrémité du bras secondaire 302, opposée à celle qui est couplée à l'axe 300, le bras secondaire 302 présente l'organe de roulement 41, ainsi que le suiveur 50 d'escamotage.

Selon ce mode de réalisation la face supérieure est inclinée, et le plan de pivotement PP dans lequel pivote le bras secondaire 302 est ainsi sécant avec un plan horizontal PH s'étendant parallèlement à l'axe X.

Ceci permet de faciliter le retour de l'organe de roulement 41 sur le fil 10 de contact après le franchissement de l'élément 11 qui forme un obstacle. En effet, l'organe de roulement 41 revient alors sur le fil 10 de contact en s'abaissant partiellement dessus.

Toujours selon le présent mode de réalisation, le ressort de traction formant les moyens de rappel élastique 60 est couplé à l'une de ses extrémités sur un point fixe 601 solidaire de la partie principale 301 du bras support, et à l'autre de ses extrémités sur un point mobile 602 solidaire du suiveur 50 d'escamotage.

La distance séparant le point fixe 601 et le point mobile 602 est moindre dans la position d'utilisation de l'organe de roulement 41 que dans sa position escamotée.

Quand le suiveur 50 d'escamotage est déplacé, par exemple à cause de la présence d'un obstacle, alors il provoque l'extension du ressort de traction et l'augmentation de la force tendant à maintenir l'organe de roulement 41 dans sa position d'utilisation

Les moyens de liaison comprennent également une butée 70 contre laquelle le bras secondaire 302 est en appui dans la position d'utilisation de l'organe de roulement 41.

Les moyens de liaison comprennent encore un bloc rapporté 303, couplé latéralement sur le bras support 30. Ce bras rapporté présente porte la butée 70, ainsi que le point fixe 601.

Le mode de réalisation précédemment décrit permet au dispositif 1 de franchir des obstacles selon au moins un premier sens de déplacement du dispositif 1 sur le fil 10 de contact.

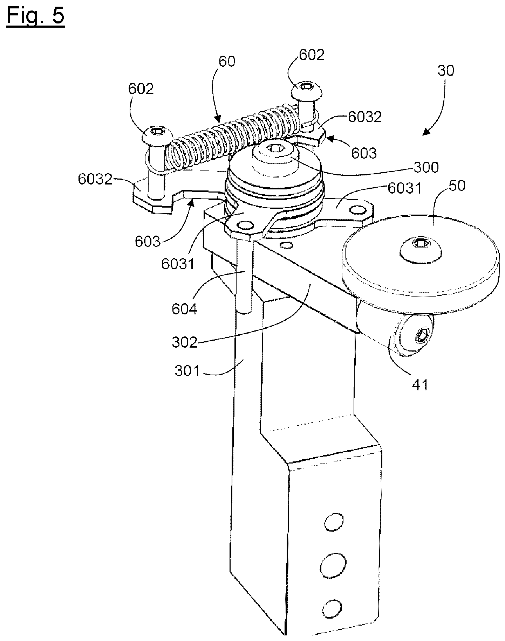

En référence à la figure 5, il est à présent décrit des spécificités d'un second mode de réalisation permettant au dispositif 1 de franchir des obstacles dans les deux sens de déplacement du dispositif 1 sur le fil 10 de contact.

Selon ce mode de réalisation, l'organe de roulement 41 est monté mobile en rotation entre deux positions escamotées, dont la première position escamotée et une seconde position escamotée.

La position d'utilisation de l'organe de roulement 41 est alors située entre ces deux positions escamotées.

Le suiveur 50 d'escamotage est dans ce cas conçu pour pouvoir également entraîner le passage de l'organe de roulement 41 de sa position d'utilisation vers sa seconde position escamotée au contact d'un élément surplombant le fil 10 de contact et auquel le fil 10 de contact est couplé, lors d'un déplacement du dispositif 1 le long du fil 10 de contact dans un second sens de déplacement, opposé au premier sens de déplacement.

Dans ce mode de réalisation, la face supérieure de la partie principale 301 du bras support 30 n'est pas inclinée par rapport à un plan horizontal PH, et le plan dans lequel pivote le bras secondaire 302 est parallèle avec l'axe X.

Selon un autre mode de réalisation envisagé, cette face supérieure est inclinée en direction du passage.

D'autres moyens peuvent néanmoins être mis en œuvre pour faciliter le retour sur le fil 10 de contact de l'organe de roulement 41, tel qu'un autre degré de liberté de l'organe de roulement 41, ou encore un dimensionnement différent du cylindre formant l'organe de roulement.

Tel que cela est visible sur la figure 5, les moyens de rappel élastique 60 comprennent alors également un croisillon comprenant deux parties mobiles 603 montées mobiles à rotation autour de l'axe 300 autour duquel le bras secondaire 302 est également monté à rotation.

Chaque partie mobile 603 du croisillon présente un doigt 604 destiné à indexer la position d'utilisation de l'organe de roulement 401, ainsi qu'un point mobile 602 sur lequel est attaché le ressort de traction, de manière distale de l'axe 300 de rotation du croisillon.

Plus précisément, chaque partie mobile 603 présente une extension avant 6031 s'étendant depuis une section centrale de la partie mobile couplée librement mobile à rotation autour de l'axe 300, et une extension arrière 6032 s'étendant depuis la section centrale à l'opposé de l'extension arrière 6032.

L'extension arrière 6032 présente ainsi le point mobile 602, tandis que l'extension avant 6031 présente le doigt 604.

Tel que cela est visible sur la figure 5, les deux parties mobiles 603 du croisillon adoptent ensemble une forme en croix.

Chaque doigt 604 s'étend perpendiculairement au plan dans lequel est monté mobile à rotation le bras secondaire 302, et s'étend en hauteur, sur au moins une partie de la hauteur du bras secondaire 302, ainsi que sur au moins une partie de la hauteur de la partie principale 301 du bras support 30.

Quand l'organe de roulement 41 est entraîné en direction d'une de ses positions escamotée, alors :
- le doigt 604 de l'une des deux parties mobile 603 du croisillon est en appui contre l'une des faces latérales de la partie principale 301 du bras support 30, ce qui maintient fixe en position par rapport à cette partie principale 301 le point mobile 602 porté par ladite partie mobile 603 du croisillon ;
- le doigt 604 de l'autre des deux parties mobile 603 du croisillon est en appui contre une face latérale du bras secondaire 302, ce qui augmente la distance séparant les deux points mobiles 602 entre lesquels le ressort de traction est attaché, au fur et à mesure de la progression de l'organe de roulement 41 vers sa position escamotée.

Cette conception permet ainsi au dispositif 1 de franchir des obstacles dans les deux sens de déplacement possible le long du fil 10 de contact.

Bien que cela ne soit pas représenté, le dispositif 1 comprend un système annexe de positionnement en position escamotée de chaque organe de roulement 41 pour l'installation et/ou la désinstallation du dispositif 1 sur un fil 10 de contact.

Ce système annexe permet de mettre tous les organes de roulement 41 en position escamotée, de manière à ouvrir une voie d'insertion du fil de contact dans le passage délimité par le bâti 20.

Deux conceptions envisageables de ce système annexe sont décrites ci-après.

Le système annexe de positionnement peut comprendre un suiveur annexe pour chaque organe de roulement 41, d'un système came/suiveur, conçu pour entraîner le passage de l'organe de roulement 41 de sa position d'utilisation vers sa position escamotée au contact d'un fil 10 de contact selon une direction d'insertion du fil 10 de contact dans le passage.

La direction d'insertion est bien entendu strictement différente de l'une des direction de déplacement du dispositif 1 le long du fil 10 de contact.

Ce suiveur annexe peut par exemple prendre la forme d'un cône s'étendant en s'amincissant depuis le galet formant le suiveur 50 d'escamotage .

Alternativement et préférentiellement, le système annexe comprend :
- un câble de traction, pour chaque organe de roulement 41, de l'organe de roulement 41 vers sa ou l'une de ses positions escamotée ;
- des moyens d'actionnement pilotables de chaque câble de traction.

Les moyens d'actionnement pilotables peuvent par exemple correspondre à un moteur conçu pour permettre l'enroulement des câbles de traction pour tracter les câbles de traction et positionner les organes de roulement 41 dans leur position escamotée, et le déroulement des câbles traction afin de libérer les organes de roulement 41. Ce moteur peut être commandé par exemple à l'aide d'un outil informatique utilisé par un opérateur humain.

Le dispositif 1 comprend avantageusement au moins quatre paires d'organes de roulement 41 espacées les unes des autres. Ceci permet que le centre de gravité du dispositif soit toujours situé entre au moins deux paires d'organes de roulement 41 toujours en contact avec un fil de contact lors du franchissement d'un obstacle, et évite que le dispositif ne soit déstabilisé voir décroché du fil de contact lors d'un tel franchissement.

De plus, la distance entre deux paires d'organes de roulement 41 séparées l'une de l'autre par uniquement un autre paire d'organe de roulement 41 est conçue pour être supérieure à la dimension longitudinale du plus grand obstacle connu sur un fil de contact (notamment une griffe de jonction), afin d'éviter que deux paires d'organes de roulement 41 soient simultanément ouvertes en même temps lors du franchissement d'un obstacle.

En référence à la figure 1, le dispositif 1 comprend des moyens moteurs conçus pour entraîner le déplacement du dispositif 1 le long du fil 10 de contact reçu dans le passage.

Ces moyens moteurs prennent par exemple la forme d'un moteur 80 électrique associé à des roues 81 entraînées en rotation par le moteur 80 électrique, les roues 81 présentant avantageusement un revêtement adapté pour améliorer l'accroche sur le fil 10 de contact.

Selon une variante non représentée, le dispositif 1 comprend un connecteur de perche de manipulation, configuré pour permettre la fixation amovible du dispositif 1 au bout d'une perche de manipulation.

Ce type de connecteur permet l'accouplement et le désaccouplement à distance du dispositif 1 sur une perche de manipulation.

Un opérateur peut utiliser une telle perche pour positionner le dispositif 1 sur un fil 10 de contact, puis désaccoupler la perche du dispositif afin de laisser évoluer de manière autonome le dispositif 1 le long du fil 10 de contact.

En l'absence de motorisation du dispositif 1 à l'aide de moyens moteur tels qu'évoqués ci-dessus, la perche de manipulation peut être utilisée afin de faire avancer et/ou reculer le dispositif 1 le long du fil 10 de contact.

Il est toutefois envisageable que le dispositif 1 soit installé sur un fil 10 de contact par un opérateur situé dans une nacelle élévatrice positionnée en hauteur à proximité de la caténaire.

Lors du positionnement du dispositif 1 sur le fil 10 de contact, ou lors de son retrait, l'opérateur utilise par exemple les moyens d'actionnement pilotables afin de positionner les organes de roulement 41 en position escamotée, afin de permettre l'insertion du fil de contact dans le passage.

Lors de son évolution le long du fil 10 de contact, le dispositif 1 roule le long de ce fil 10 de contact à l'aide des organes de roulement 41 qui roulent sur le fil 10 de contact tout en permettant la suspension du dispositif 1 sur le fil 10 de contact.

En présence d'un obstacle formé par un élément 11 surplombant le fil de contact et auquel le fil de contact est couplé, le dispositif 1 va quand même pouvoir franchir cet obstacle grâce à ses organes de roulement 41 qui peuvent passer temporairement en position escamotée tel que cela est détaillé ci-dessus.

Le dispositif 1 précédemment décrit peut être suspendu sur un fil de contact et évoluer le long du fil de contact d'une manière optimisée par rapport à ce qui est permis par l'art antérieur. Ce dispositif 1 présente une conception robuste et fiable.

## Revendications

1. Dispositif (1) de maintenance de fil (10) de contact de caténaire, comprenant :
- un bâti (20) délimitant un passage pour un fil (10) de contact ;
- des moyens de liaison sur un fil (10) de contact reçu dans le passage, les moyens de liaison étant destinés à permettre le déplacement du dispositif (1) le long du fil (10) de contact, les moyens de liaison étant portés par le bâti (20) et comprenant des organes de roulement (41) sur le fil (10) de contact reçu dans le passage et sur lequel le dispositif (1) est suspendu ;
dans lequel chaque organe de roulement (41) est monté mobile entre une position d'utilisation dans laquelle l'organe de roulement (41) surplombe le passage pour pouvoir rouler sur le fil (10) de contact reçu dans le passage, et au moins une première position escamotée dans laquelle l'organe de roulement (41) ne surplombe pas le passage,
**caractérisé en ce que**
les moyens de liaison comprennent un suiveur (50) d'escamotage pour chaque organe de roulement (41), d'un système came/suiveur, conçu pour entraîner le passage de l'organe de roulement (41) de sa position d'utilisation vers sa première position escamotée au contact d'un élément (11) surplombant le fil (10) de contact et auquel le fil (10) de contact est couplé, lors d'un déplacement du dispositif (1) le long du fil (10) de contact dans au moins un premier sens de déplacement,
et **en ce que** les moyens de liaison comprennent des moyens de rappel élastique (60) de chaque organe de roulement (41) dans sa position d'utilisation.

2. Dispositif (1) selon la revendication précédente, **caractérisé en ce que** chaque organe de roulement (41) est monté mobile en rotation entre deux positions escamotées, dont la première position escamotée et une seconde position escamotée, entre lesquelles est située la position d'utilisation, le suiveur (50) d'escamotage étant conçu pour entraîner le passage de l'organe de roulement (41) de sa position d'utilisation vers sa seconde position escamotée au contact d'un élément (11) surplombant le fil (10) de contact et auquel le fil (10) de contact est couplé, lors d'un déplacement du dispositif (1) le long du fil (10) de contact dans un second sens de déplacement, opposé au premier sens de déplacement.

3. Dispositif (1) selon l'une quelconque des revendications précédentes, **caractérisé en ce qu'**il comprend des moyens moteurs conçus pour entraîner le déplacement du dispositif (1) le long du fil (10) de contact reçu dans le passage.

4. Dispositif (1) selon l'une quelconque des revendications précédentes, **caractérisé en ce qu'**il comprend un système annexe de positionnement en position escamotée de chaque organe de roulement (41) pour l'installation et/ou la désinstallation du dispositif (1) sur un fil (10) de contact.

5. Dispositif (1) selon la revendication précédente, **caractérisé en ce que** le système annexe de positionnement comprend un suiveur annexe pour chaque organe de roulement (41), d'un système came/suiveur, conçu pour entraîner le passage de l'organe de roulement (41) de sa position d'utilisation vers sa position escamotée au contact d'un fil (10) de contact selon une direction d'insertion du fil (10) de contact dans le passage.

6. Dispositif (1) selon la revendication 4, **caractérisé en ce que** le système annexe comprend :
- un câble de traction, pour chaque organe de roulement (41), de l'organe de roulement (41) vers sa ou l'une de ses positions escamotée ;
- des moyens d'actionnement pilotables de chaque câble de traction.

7. Dispositif (1) selon l'une quelconque des revendications précédentes, **caractérisé en ce qu'**il comprend un connecteur de perche de manipulation, configuré pour permettre la fixation amovible du dispositif au bout d'une perche de manipulation.

8. Dispositif (1) selon l'une quelconque des revendications précédentes, **caractérisé en ce que** les moyens de liaison comprennent des roulements de guidage (42) du fil (10) de contact dans le passage.

## Patentansprüche

1. Vorrichtung (1) zur Wartung eines Oberleitungskontaktdrahts (10), umfassend:
- einen Rahmen (20), der einen Durchgang für einen Kontaktdraht (10) begrenzt;
- Verbindungsmittel an einem in dem Durchgang aufgenommenen Kontaktdraht (10), wobei die Verbindungsmittel dazu bestimmt sind, die Bewegung der Vorrichtung (1) entlang des Kontaktdrahts (10) zu ermöglichen, wobei die Verbindungsmittel vom Rahmen (20) getragen werden und Rollelemente (41) am im Durchgang aufgenommenen Kontaktdraht (10) umfassen, an dem die Vorrichtung (1) aufgehängt ist;
wobei jedes Rollelement (41) beweglich zwischen einer Gebrauchsposition, in der das Rollelement (41) den Durchgang überragt, um auf dem in dem Durchgang aufgenommenen Kontaktdraht (10) rollen zu können, und mindestens einer ersten versenkten Position, in der das Rollelement (41) den Durchgang nicht überragt, montiert ist,
**dadurch gekennzeichnet, dass**
die Verbindungsmittel für jedes Rollelement (41) einen Rückzugsmitnehmer (50) eines Nocken-/Mitnehmersystems umfassen, das so ausgelegt ist, dass es den Übergang des Rollelements (41) von seiner Gebrauchsposition in seine erste versenkte Position in Kontakt mit einem Element (11), das den Kontaktdraht (10) überragt und mit dem der Kontaktdraht (10) gekoppelt ist, während einer Bewegung der Vorrichtung (1) entlang des Kontaktdrahts (10) in mindestens einer ersten Bewegungsrichtung bewirkt,
und dass die Verbindungsmittel Mittel (60) zum elastischen Zurückstellen jedes Rollelements (41) in seine Gebrauchsposition umfassen.

2. Vorrichtung (1) nach dem vorhergehenden Anspruch, **dadurch gekennzeichnet, dass** jedes Rollelement (41) drehbeweglich zwischen zwei versenkten Positionen montiert ist, nämlich der ersten versenkten Position und einer zweiten versenkten Position, zwischen denen sich die Gebrauchsposition befindet, wobei der Rückzugsmitnehmer (50) so ausgelegt ist, dass er den Übergang des Rollelements (41) von seiner Gebrauchsposition in seine zweite versenkte Position in Kontakt mit einem Element (11), das den Kontraktdraht (10) überragt und mit dem der Kontaktdraht (10) gekoppelt ist, während einer Bewegung der Vorrichtung (1) entlang des Kontaktdrahtes (10) in einer zweiten, der ersten Bewegungsrichtung entgegengesetzten Bewegungsrichtung bewirkt.

3. Vorrichtung (1) nach einem der vorhergehenden Ansprüche, **dadurch gekennzeichnet, dass** sie motorische Mittel umfasst, die so ausgelegt sind, dass sie die Bewegung der Vorrichtung (1) entlang des in dem Durchgang aufgenommenen Kontaktdrahts (10) bewirken.

4. Vorrichtung (1) nach einem der vorhergehenden Ansprüche, **dadurch gekennzeichnet, dass** sie ein Zusatzsystem zum Positionieren jedes Rollelements (41) in einer versenkten Position zum Anbringen und/oder Entfernen der Vorrichtung (1) an/von einem Kontaktdraht (10) umfasst.

5. Vorrichtung (1) nach dem vorhergehenden Anspruch, **dadurch gekennzeichnet, dass** das Zusatzpositionierungssystem für jedes Rollelement (41) einen Zusatzmitnehmer eines Nocken-/Mitnehmersystems umfasst, das so ausgelegt ist, dass es den Übergang des Rollelements (41) von seiner Gebrauchsposition in seine versenkte Position in Kontakt mit einem Kontaktdraht (10) entsprechend einer Einführrichtung des Kontaktdrahts (10) in den Durchgang bewirkt.

6. Vorrichtung (1) nach Anspruch 4, **dadurch gekennzeichnet, dass** das Zusatzsystem Folgendes umfasst:
- ein Zugseil für jedes Rollelement (41), vom Rollelement (41) zu seiner oder einer seiner versenkten Positionen;
- steuerbare Betätigungsmittel für jedes Zugseil.

7. Vorrichtung (1) nach einem der vorhergehenden Ansprüche, **dadurch gekennzeichnet, dass** sie einen Steckverbinder für eine Handhabungsstange umfasst, der so konfiguriert ist, dass er eine bewegliche Befestigung der Vorrichtung am Ende einer Handhabungsstange ermöglicht.

8. Vorrichtung (1) nach einem der vorhergehenden Ansprüche, **dadurch gekennzeichnet, dass** die Verbindungsmittel Führungslager (42) für den Kontaktdraht (10) in dem Durchgang umfassen.

## Claims

1. Device (1) for maintaining a catenary contact wire (10), comprising:
- a frame (20) delimiting a passage for a contact wire (10);
- connecting means on a contact wire (10) received in the passage, the connecting means being designed to allow the movement of the device (1) along the contact wire (10), the connecting means being carried by the frame (20) and comprising members (41) running on the contact wire (10) received in the passage and on which the device (1) is suspended;
wherein each running member (41) is mounted to move between a position of use in which the running member (41) overhangs the passage to enable it to run on the contact wire (10) received in the passage, and at least one first retracted position in which the running member (41) does not overhang the passage,
**characterised in that**
the connecting means comprise a retraction follower (50) for each running member (41), along with a cam/follower system designed to drive the running member (41) from its position of use to its first retracted position in contact with an element (11) that overhangs the contact wire (10) and to which the contact wire (10) is coupled, when the device (1) is moved along the contact wire (10) in at least one first direction of movement,
and that the connecting means comprise resilient means (60) for returning each running member (41) to its position of use.

2. Device (1) according to the preceding claim, **characterised in that** each running member (41) is mounted to rotate between two retracted positions, namely a first retracted position and a second retracted position, between which position of use is located, the retraction follower (50) being designed to drive the running member (41) from its position of use to its second retracted position in contact with an element (11) that overhangs the contact wire (10) and to which the contact wire (10) is coupled, when the device (1) is moved along the contact wire (10) in a second direction of movement, opposite to the first direction of movement.

3. Device (1) according to any one of the preceding claims, **characterised in that** it includes motor means designed to drive the movement of the device (1) along the contact wire (10) received in the passage.

4. Device (1) according to any one of the preceding claims, **characterised in that** it includes an auxiliary system for positioning each running member (41) in a retracted position for the installation and/or removal of the device (1) on a contact wire (10).

5. Device (1) according to the preceding claim, **characterised in that** the auxiliary positioning system comprises an auxiliary follower for each running member (41), along with a cam/follower system designed to drive the passage of the running member (41) from its position of youth to its retracted position in contact with a contact wire (10) in a direction of insertion of the contact wire (10) in the passage.

6. Device (1) according to claim 4, **characterised in that** the auxiliary system comprises:
- a traction cable for each running member (41), for drawing the running member (41) to its retracted position or one of its retracted positions;
- controllable actuation means for each traction cable.

7. Device (1) according to any one of the preceding claims, **characterised in that** it includes a handling pole connector, configured to allow the removable attachment of the device at the end of a handling pole.

8. Device (1) according to any one of the preceding claims, **characterised in that** the connecting means comprise bearings (42) for guiding the contact wire (10) in the passage.
